(19) Europäisches Patentamt
European Patent Office
Office européen des brevets

(11) **EP 2 731 022 B1**

(12) **EUROPEAN PATENT SPECIFICATION**

(45) Date of publication and mention
of the grant of the patent:
**18.02.2015 Bulletin 2015/08**

(51) Int Cl.:
***G06F 17/30*** *(2006.01)*

(21) Application number: **12191694.4**

(22) Date of filing: **07.11.2012**

(54) **Method and apparatus for storing encoded graph data**

Verfahren und Vorrichtung zur Speicherung von codierten graphischen Daten

Procédé et appareil pour stocker des données codées de graphique

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**14.05.2014 Bulletin 2014/20**

(73) Proprietor: **FUJITSU LIMITED**
**Kawasaki-shi,**
**Kanagawa 211-8588 (JP)**

(72) Inventors:
• **Hu, Bo**
**Huntingdon, Cambridgeshire PE29 6JL (GB)**
• **Carvalho, Nuno**
**Hayes, Middlesex UB4 8FE (GB)**
• **Matsutsuka, Takahide**
**Hayes, Middlesex UB4 8FE (GB)**

(74) Representative: **Hutchison, James**
**Haseltine Lake LLP**
**300 High Holborn**
**London, Greater London WC1V 7JH (GB)**

(56) References cited:
**US-A1- 2011 022 816     US-A1- 2011 093 463**

• **Prima Chairunnanda ET AL: "Graph Data Partition Models for Online Social Networks", HT '12 Proceedings of the 23rd ACM conference on Hypertext and social media, 25 June 2012 (2012-06-25), pages 175-179, XP055053148, Retrieved from the Internet: URL:http: //dl.acm.org/citation.cfm?id=2310 026 [retrieved on 2013-02-12]**

**Description**

The present invention is in the field of data storage. In particular, the embodiments of the present invention relate to the storage of triples encoding graph data within a distributed storage environment.

Relational databases store data in rows and columns. The rows and columns compose tables that need to be defined before storing the data. The definition of the tables and the relationship between data contained on these tables is called a schema. A relational database uses a fixed schema. Graph databases represent a significant extension over relational databases by storing data in the form of nodes and arcs, where a node represents an entity or instance, and an arc represents a relationship of some type between any two nodes. In an undirected graph, an arc from node A to node B is considered to be the same as an arc from node B to node A. In a directed graph, the two directions are treated as distinct arcs.

Graph databases are used in a wide variety of different applications that can be generally categorized into two major types. The first type consists of complex knowledge-based systems that have large collections of class descriptions (referred to as "knowledge-based applications"), such as intelligent decision support and self learning. The second type includes applications that involve performing graph searches over transactional data (referred to as "transactional data applications"), such as social data and business intelligence. Many applications may represent both types. However, most applications can be characterized primarily as either knowledge-based or transactional data applications. Graph databases can be used to maintain large "semantic networks" that can store large amounts of structured and unstructured data in various fields. A semantic network is used as a form of knowledge representation and is a directed graph consisting of nodes that represent concepts, and arcs that represent semantic relationships between the concepts.

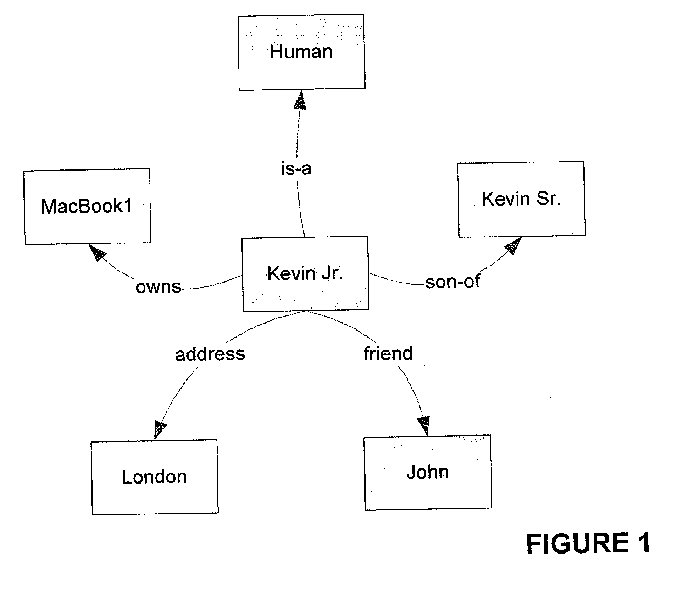

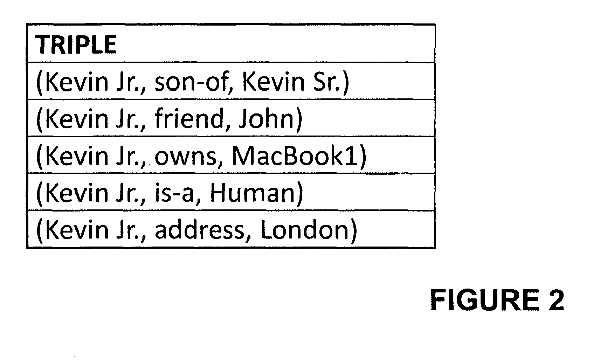

There are several types of graph representations. Graph data may be stored in memory as multidimensional arrays, or as symbols linked to other symbols. Another form of graph representation is the use of "tuples," which are finite sequences or ordered lists of objects, each of a specified type. A tuple containing n objects is known as an "n-tuple," where n can be any non-negative integer greater than zero. A tuple of length 2 (a 2-tuple) is commonly called a pair, a 3 -tuple is called a triple, a four-tuple is called a quadruple, and so on. Figure 1 illustrates an example of graph data, and Figure 2 illustrates a list of triples which encode the graph data.

As the size of graph databases, such as those recording ontology knowledge bases, grows, it becomes imperative to distribute graph ontology models to multiple storage units for better scalability and performance. Adding, deleting and querying data must be done in a coordinated way, using algorithms and data structures specially tailored for distributed systems. It is desirable to store graph data in a way which enables computationally efficient querying, maintenance, and manipulation of the data.

Graph data models are ideal for semantic data representation and are widely adopted in ontology-based applications. As the size of ontology knowledge bases grows, it becomes imperative to distribute graph ontology models to multiple storage units for better scalability and performance.

Existing approaches to storing graph databases include a variety of graph partitioning approaches and data caching solutions that are tuned against graph representation. Both approaches have performance limitations that may be undesirable to a database administrator or user. Graph partitioning and/or clustering is intrinsically complex and can be NP-complete in general. When using graph representation for an ontology, it is difficult to maintain data balance and minimum data replication across multiple storage units while at the same time ensuring that is no knowledge loss during the distribution process. Therefore, a large amount of inter sub-graph references are added, which minimises knowledge loss, but also means that a majority of the graph partition and clustering approaches fail to significantly reduce inter data-node communication, and thus overall database performance suffers. Caching suffers some performance deterioration when graph traversals are performed, since they often incur extensive network communication among storage units in order to piece together data for a query.

United States patent publication US2011/0022816A1 discloses a partitioning method which partitions a tuple space along more than one dimension and, by storing tuples redundantly, allows transactions restricted along one or more of the partitioned dimensions to be handled by accessing a single node. The object of the invention is solved by the features of the independent claims. Further embodiments are the subject matter of the dependent claims. Embodiments of the present invention include a method of storing a database of graph data encoded as triples, each triple denoting a subject graph resource, an object graph resource and a directed predicate linking the two graph resources, the method comprising: storing each of the triples as a member of an ordered set distributed across a plurality of storage units, the order of the triples being determinable by comparisons between the triples; maintaining one or more storage areas, each associated with a different triple and being stored on the same storage unit as the associated triple; and populating the or each of the one or more storage areas with duplicates of triples that define a sub-graph or sub-graphs overlapping with the subject or the object of the associated triple on the database of graph data.

Advantageously, embodiments of the present invention provide a database which enables efficient querying of triples by storing them in an ordered set, but also enables quick access to triples closely associated with an accessed or queried triple by providing associated storage areas populated with duplicates of triples that are likely to be accessed in conjunction with the accessed or queried triple. Therefore, graph traversals are reduced, query response times are reduced (reduced latency in disk I/O), and network traffic is reduced.

A graph database of graph data may include a semantic network formed as a representation of knowledge or information, with graph nodes representing concepts such as an entity or an instance, and arcs representing semantic relationships between the concepts. In embodiments of the present invention, graph data is encoded as a triple, which is a finite sequence or ordered list of three objects, each of a specified type. The subject and object of the triple represent the concept or entity (collectively referred to as 'graph resources') that are linked on the graph, and the predicate represents the arc linking the two. Denoting graph resources or links between them includes representing the graph resources or links, for example by a label, reference, or data embodying the resources or links.

Optionally, the triples may be Resource Description Framework (RDF) triples. Throughout this document, it should be understood that where specific references to "RDF triple(s)" are made, it is an exemplary form of triple, conforming to the RDF standard. Furthermore, references to "triple(s)" include the possibility that the triple in question is an RDF triple. Similarly, the RDF processors discussed elsewhere in this document are exemplary of processors used for interaction between the API wrapper and the stored data items.

The Resource Description Framework is a general method for conceptual description or modeling of information that is a standard for semantic networks. Standardising the modeling of information in a semantic network allows for interoperability between applications operating on a common semantic network. RDF maintains a vocabulary with unambiguous formal semantics, by providing the RDF Schema (RDFS) as a language for describing vocabularies in RDF.

The triples provide for encoding of graph data by characterising the graph data as a plurality of subject-predicate-object expressions. In that context, the subject and object are graph nodes of the graph data, and as such are entities, objects, instances, or concepts (collectively 'graph resources'), and the predicate is a representation of a relationship between the subject and the object. The predicate asserts something about the subject by providing a specified type of link to the object. For example, the subject may denote a Web resource (for example, via a URI), the predicate denote a particular trait, characteristic, or aspect of the resource, and the object denote an instance of that trait, characteristic, or aspect. In other words, a collection of triple statements intrinsically represents directional graph data. The RDF standard provides formalised structure for such triples.

The plurality of storage units may be considered a distributed network of storage nodes and may include a system of more than one distinct storage units in communication with one another. An exemplary communication paradigm is peer-to-peer (P2P), hence it may be that the distributed network of nodes is a peer-to-peer network of nodes. P2P is a distributed architecture that partitions tasks or workloads between peers. Peers (individual nodes or processes) are equally privileged, equipotent participants in the application. Each peer is configured to make a portion of its resources, such as processing power, disk storage or network bandwidth, directly available to other network participants, without the need for central coordination by servers or stable hosts. Peers can be considered to be both suppliers and consumers of resources, in contrast to a traditional client-server model where servers supply and clients consume. Advantageously, a P2P system can maintain large groups of nodes exchanging messages with a logarithmic communication cost.

In embodiments, for example those in which the object of the triple is complex, it may be that the object stored in the ordered data item is a universal unique ID (UUID) generated for that object. This option may be useful in embodiments used in implementation scenarios in which objects are large and hence their size reduces the efficiency of the range query procedure.

In embodiments of the present invention, the triple is stored as a member of an ordered data set, so that a query which returns a data item enables the representation of the triple to be retrieved.

In embodiments of the present invention, data items may be ordered by the lexical order of a string object representing elements of the triple, the string object being the data item, or included in the data item. For example, the lexical order may be alphabetical order. It may be desirable in implementations of invention embodiments to query a set of data items by fixing either the subject, the predicate, or the object (or the UUID of the object) of the data items. Thus, the order of the data set can be established by comparisons between the triples, and the comparisons are repeatable.

The data items being ordered enables comparisons between data items to be made and range queries to be executed. A range query between K1 and K2 (where K1<K2) is a query that returns the data items contained in the ordered set of data items that are greater than K1 and less than K2, according to some pre-defined ordering metric of the keys. Of course, the set of data items is split across the nodes (wherein the nodes are resources such as servers, or processes running on those servers) of a distributed network of nodes. In an exemplary embodiment, a range query is initiated by a processor such as an RDF processor on behalf of an application by sending the query to one of the nodes. The node is configured to calculate which other nodes have data items sought by the query, for example, by applying the logical representation of the data items to K1 and K2, and executing sub-range queries on those nodes. The node is then configured to gather the results (maintaining the order of the data items) and return them to the processor that invoked the query.

Optionally, each of one or more of the elements of the triple (an element being the predicate, the object, or the subject) is a Uniform Resource Identifier (URI). RDF and other triple formats are premised on the notion of identifying things (i.e. objects, resources or instances) using Web identifiers such as URIs and describing those identified 'things' in terms of simple properties and property values. In terms of the triple, the subject may be a URI identifying a web resource describing an entity, the predicate may be a URI identifying a type of property (for example, colour), and the object may be a URI specifying the particular instance of that type of property that is attributed to the entity in question, in its web resource incarnation. The use of URIs enables triples to represent simple statements, concerning resources, as a graph of nodes and arcs representing the resources, as well as their respective properties and values. An RDF graph can be queried using the SPARQL Protocol and RDF Query Language (SPARQL). It was standardized by the RDF Data Access Working Group (DAWG) of the World Wide Web Consortium, and is considered a key semantic web technology. SPARQL allows for a query to consist of triple patterns, conjunctions, disjunctions, and optional patterns.

In invention embodiments, one or more stored triples are each stored in association with a storage area storing a sub-graph or sub-graphs of related triples. Optionally the sub-graph or sub-graphs stored in a storage area comprise the sub-graph defined by a maximum number of predicate links directed away from either the object graph resource or the subject graph resource of the associated triple.

Advantageously, such embodiments provide a simple mechanism for selecting graph data to duplicate in the storage area associated with a triple. Furthermore, a graph traversal accessing the associated triple and following predicate links away from a graph resource of the triple will inevitably access triples describing the sub graph formed by resources neighbouring the resources of the triple, and their neighbours, and so on. Hence loading the contents of the storage area into a cache or other quickly accessible storage facility when the associated triple is accessed will enable a graph traversal query to proceed with data already loaded into the cache. The maximum number of predicate links may also be referred to as a connection level or depth, and encompasses all triples within that number of links of the graph resource in question.

In order to maintain data consistency, embodiments of the present invention may further include updating the populations of the or each of the one or more storage areas by adding a duplicate of a new triple inserted into the defined sub-graph.

Advantageously, embodiments which have a mechanism to update the populations of the storage area maintain their relevance and hence optimise the chance that loading the storage area associated with a triple to a cache when the triple is loaded will obviate the need for one or more accesses to the main ordered data set.

As an alternative or additional approach to selecting triples to duplicate in the storage areas, the sub-graph or sub-graphs may comprise the one or more sub-graphs defined by selected graph traversal routes among graph traversal routes including either the object graph resource or the subject graph resource of the associated triple.

Advantageously, this approach is based on historical information indicating commonly-taken graph traversal paths, hence there is a likelihood that future graph traversals will follow the same paths, and that the associated storage area will provide a repository of triple duplicates can access when querying a triple without needing to access the main data set. Each selected commonly-taken graph traversal route may be considered to form its own sub-graph, although of course there may be significant overlap between them, and where there is overlap only a single version of the overlapped triple is stored in the storage area. The graph traversal routes may be limited so that only, for example, duplicates of triples within five predicate links of a graph resource of the associate triple are stored in the storage area, alternatively, the graph traversal routes may not be limited in that way and duplicates of triples along the graph traversal route between the associated triple and termination of the route are stored in the storage area.

Such embodiments may further comprise updating the populations of the or each of the one or more storage areas by re-selecting the graph traversal routes defining the one or more sub-graphs.

Advantageously, embodiments which have a mechanism to update the populations of the storage area maintain their relevance and hence optimise the chance that loading the storage area associated with a triple to a cache when the triple is loaded will obviate the need for one or more accesses to the main ordered data set.

Optionally, the selecting or re-selecting of graph traversal routes is in dependence upon the usage frequency of graph traversal routes including either the object graph resource or the subject graph resource of the associated triple.

Historical graph traversal data may be stored on a system log or query log relating to the graph database globally and accessible to storage units and other computing apparatuses storing the database. The statistics may be based on simply counting the number of times paths are previously queried/traversed.

Updating the populations of the or each of the one or more storage areas may include removing a duplicate from the population in dependence upon: the time elapsed since the duplicate was last accessed relative to the time elapsed since the other duplicates in the population were last accessed; and/or the frequency of read accesses to the storage area in which the duplicate is accessed relative to the frequency of read accesses to the storage area in which the other duplicates in the population are accessed.

Of course, the advantage gained by loading the storage area to a cache when the associated triple is queried will depend on the size of the storage area and the number of queries or accesses to the main data set that are obviated. A maximum size of the storage area may be set both in view of saving overall storage space and making sure that the process of loading the storage area to the cache, and accessing the duplicate triples within the storage area once loaded to the cache, is quick and represents an efficient use of computing resources relative to querying the main data set.

The precise format in which the triples are stored will depend on the implementation, but optionally, the triples are stored as string objects, and the triples are ordered according to alphabetical comparisons of the string objects.

Advantageously, a string object is universally readable and established routines for its comparison and other handling requirements exist. The database itself and applications accessing the database may have well-established routines for handling string objects. Furthermore, string objects are quick to search and compare (order).

Advantageously, databases functions such as searching, ranging, and other comparison functions are available which are optimised in terms of computational efficiency to compare the alphabetical content of string data objects. Hence embodiments ordering data items in this way are particularly efficient in terms of computational efficiency. In such embodiments, it may that the data items are ordered according to the alphabetical order of their string objects. The data items may simply be string objects, or they may include other objects or data. A string is a sequence of alphanumeric symbols.

An exemplary database structure to include in invention embodiments is a key value system in which each of the one or more storage areas are values of key-value pairs, and their associated triples are the respective keys.

Invention embodiments include implementations in which each of the triples is a key of a key-value pair within a key-value system (KVS). Advantageously, storage of keys including a full triple within the key of a key-value system enables functions to be performed on the set of keys that return the full triple, rather than simply a link or identifier to where the triple might be found.

The value is the data storage area accessed via the key, and in invention embodiments the value of a key value pair includes the data storage area associated with the triple that is the key of said key value pair.

Being stored in the key of a key-value pair may include representing the elements of the triple as a string object which is itself the key of the key-value pair.

A key-value system (KVS), or key-value store, is a plurality of stored keys and values, with each key having an associated value to which it is mapped via a logical function or logical tree, for example a hash table or hash map. A hash table or hash map is a data structure that uses a hash function to map keys (identifying values) to their associated values. In embodiments of the present invention, a hash function may be used to transform a key into an identification of the storage unit (storage resource) on which the triple and associated storage area are stored from among the plurality of storage units.

The triples and associated stored data, whether stored as a KVS or in any other form, are accessible to client applications, which issue requests/queries for data in the database. For example, a query may be for a single triple, or for a range of triples, and may be part of a graph traversal operation in which a sequence of triples linked semantically (for example, the object of one access being the subject of the next) are accessed. Embodiments may include receiving an access request at a storage unit for triples stored thereon, and responding to that request by outputting the requested triple or triples, and their associated storage areas (or the contents thereof), wherein the associated storage areas may be output to a temporary storage unit such as a cache memory which is accessible at a higher speed than the storage unit itself. When a subsequent access is made to a triple whose duplicate has previously been output to the cache and is still present in the cache, the duplicate can be output from the cache rather than from the main storage unit. In addition, the storage area associated with that triple may be output by the storage unit on which it is stored (for example, output into the local cache memory).

In order to further facilitate graph traversals with minimal network traffic, each duplicate populating one of the one or more storage areas may be stored in correspondence with an identifier, identifying the storage unit from among the plurality of storage units on which the original triple is stored; and the method further comprises: at one of the plurality of storage units, receiving an access request specifying a triple; reading the specified triple and loading the associated storage area into a cache memory of the one of the plurality of storage units; and if a new access request is received at the one of the plurality of storage units specifying a triple of which a duplicate is included in the population of the storage area loaded into the cache memory, using the identifier corresponding to the duplicate to send a request to the identified storage unit for the storage area associated with the original version of the triple specified in the new access request.

In another aspect of embodiments of the present invention, there is provided a database controller configured to control a database in which graph data is encoded as triples, each triple denoting a subject graph resource, an object graph resource, and a directed predicate linking the two graph resources, the database controller comprising: a triple storage controller configured to control storing each of the triples as a member of an ordered data set distributed across a plurality of storage units, and configured to determine the order of the triples by comparisons between them; a storage area controller configured to maintain one or more storage areas, each associated with a different triple and being stored on the same storage unit as the associated triple; and a storage area population controller configured to populate the or each of the one or more storage areas with duplicates of triples that define a sub-graph or sub-graphs overlapping with the subject or object of the associated triple on the database of graph data.

A database controller embodying the invention may be realised by a centralised apparatus in communication with each of the plurality of storage units and configured to send instructions to each to control storing of triples and maintaining and populating of storage areas. Alternatively, the database controller may be realised by a suite of computing apparatuses, for example, the computing apparatuses hosting the plurality of storage units, operating cooperatively with one another. In either case, the database controller may be provided as dedicated hardware, or as software which causes a computing apparatus or apparatuses to function as the database controller when executed by that apparatus or those apparatuses. Controlling storage of triples may include receiving a request to store a triple in the database, for example, which may have originated at a client application, performing comparisons with the current stored ordered data set in order to establish a position in the ordered data set for the new triple, possibly using a hash function to assign the new triple to a storage unit among the distributed storage units, and instructing the storage unit to store the new triple. Maintaining the one or more storage areas may include allocating a dedicated storage space on the storage unit for that use, and linking the storage area with the associated triple. Populating the or each of the one or more storage areas may involve selecting triples to duplicate in the storage area, for example using one of the approaches set out above or elsewhere in this document, and generating copies of the selected triples within the storage area.

In another aspect of embodiments of the present invention, there is provided a computing apparatus configured to operate as a storage unit among a distributed network of storage units storing a database of graph data encoded as triples, each triple denoting a subject graph resource, an object graph resource and a directed predicate linking the two graph resources, the computing apparatus comprising: a triple storage unit configured to store each of a subset of the triples as a member of an ordered subset, the ordered subset forming part of an ordered set of triples distributed across the distributed network of storage units, the order of the triples being determinable by comparisons between the triples; a storage area storage unit configured to maintain one or more storage areas, each associated with a different triple from among the ordered subset and being populated with duplicates of triples that define a sub-graph or sub-graphs overlapping with the subject or the object of the associated triple on the database of graph data.

Such a computing apparatus may be, for example, a server. In addition to storage functionality the computing apparatus is configured to perform processing operations and to communicate with other storage units in a distributed network of storage units and/or with a centralised controller.

Embodiments may be provided in the form of a system comprising a database controller embodying the invention and a plurality of computing apparatuses embodying the invention, configured to operate as a distributed network of storage units.

In such embodiments, the plurality of computing apparatuses may be configured to operate cooperatively to form the database controller.

Furthermore, invention embodiments may include a suite of computer programs which, when executed by a distributed network of computing apparatuses, cause the distributed network of computing apparatuses to function as a system embodying the invention.

Furthermore, embodiments of the present invention include a computer program or suite of computer programs, which, when executed by a system of computing apparatuses including a distributed network of storage units cause the system to perform a method embodying the present invention.

Although the aspects (software/methods/apparatuses) are discussed separately, it should be understood that features and consequences thereof discussed in relation to one aspect are equally applicable to the other aspects. Therefore, where a method feature is discussed, it is taken for granted that the apparatus embodiments include a unit or apparatus configured to perform that feature or provide appropriate functionality, and that programs are configured to cause a computing apparatus on which they are being executed to perform said method feature.

In any of the above aspects, the various features may be implemented in hardware, or as software modules running on one or more processors. Features of one aspect may be applied to any of the other aspects.

The invention also provides a computer program or a computer program product for carrying out any of the methods described herein, and a computer readable medium having stored thereon a program for carrying out any of the methods described herein. A computer program embodying the invention may be stored on a computer-readable medium, or it could, for example, be in the form of a signal such as a downloadable data signal provided from an Internet website, or it could be in any other form.

Preferred features of the present invention will now be described, purely by way of example, with reference to the accompanying drawings, in which:-

Figure 1 illustrates a domain ontology laid out as a graph database;
Figure 2 illustrates a list of triples encoding the graph database of Figure 1;
Figure 3 sets out a flow of operations in an embodiment of the present invention;
Figure 4 illustrates a process which leverages the storage areas in invention embodiments;
Figure 5 illustrates an exemplary system architecture embodying the present invention;
Figure 6 illustrates an exemplary approach to selecting triples to duplicate in a storage area;
Figure 7 illustrates another exemplary approach to use as an alternative or additional approach to that illustrated in Figure 6; and
Figure 8 illustrates an exemplary procedure for updating a storage area.

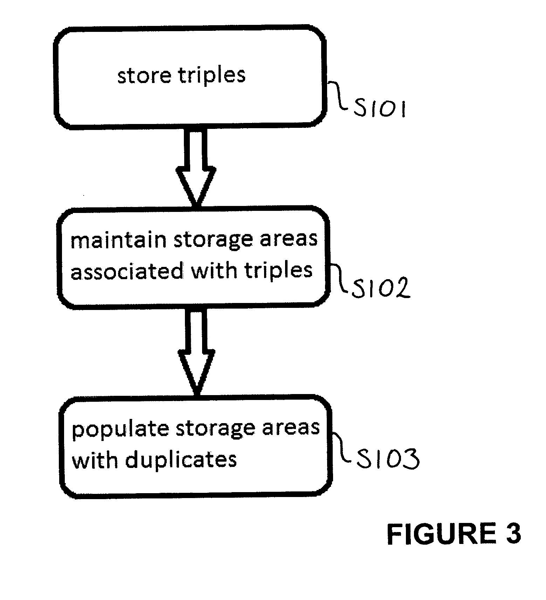

Although the steps in Figure 3 are laid out sequentially, it should be understood that the method steps are not limited to being performed in that order. Indeed, certain of the steps may be ongoing, and certain of the steps may be performed in parallel with one another. At step S101 triples are stored. Storing a triple may be considered to be a one-off instruction, such as that which may be carried out by a database controller, or an ongoing maintenance of data representing the triple, such as that which may be carried out by a storage unit. Which interpretation of storing a triple to employ is intended will be clear from context, and a skilled person will have no problem in interpreting when one or the other or both interpretations are feasible.

The triples are mapped to storage units according to the position of the triple within an ordered set of all the triples encoding the graph database. The order is determinable by comparisons between the triples, and algorithms optimised for ordering data sets in as few comparisons as possible may be executed. The comparison basis must be repeatable, so that a comparison between two or more triples will place them in the same order each time it is carried out. An exemplary comparison basis is alphabetical order. The ordered triples are then mapped to storage units within the distributed network of storage units. Incidentally, the mapping may be performed by a central database controller, by a particular one of the storage units or computing apparatuses hosting said storage units, or by more than one of such computing apparatuses in cooperation with one another, or in any other way. The storage unit on which a triple is stored is dependent upon its position within the ordered data set.

In preferred embodiments, each storage unit stores an equal share or an approximately equal share of data items. However, embodiments of the present invention are not limited in this respect, and the mapping mechanism (or mapping function) may result in an uneven distribution of data items across network nodes.

At step S102 one or more storage areas, each associated with a different triple and being stored on the same storage unit as the associated triple, are maintained. Maintaining the storage areas includes maintaining an association or link between a triple and its associated storage area, for example, storing the triples and storage areas as an associative array. The storage areas may be of a size determined by their population, or may have a set size determinable and adjustable by a system administrator. The storage areas are maintained by the storage units on which they are located, as controlled by a database controller, on an ongoing basis, but may have their size adjusted, and eventually be removed altogether, if, for example, the associated triple is not accessed frequently enough or if a long period of time passes since the triple was last accessed. Thereby, space at the storage unit can be prioritised for frequently accessed triples and their related nodes.

At step S103 the storage areas are populated with triples that are logically or semantically related to their associated triple. Embodiments store triples as an ordered set, which enables efficient querying of the graph database. However, graph traversals (series of read accesses) follow logical routes around the database by following predicate links defining semantic relationships. Thus, since ordering of the triples does not necessarily reflect their semantic relationships, a graph traversal route following predicate links between graph resources may jump around a lot in terms of the positions of the triples it accesses within the ordered data set, and hence may frequently jump from one storage unit to another and so on. The population of a storage area with duplicates of triples which are related to a triple associated with the storage area, means that graph traversals can be made which follow predicate links around the graph database without having to jump between storage units. That is to say, when a triple is accessed, its associated storage area, or the contents thereof, can be loaded into the cache memory or some other quickly accessible level of data storage on the storage unit so that triples which are likely to be accessed next in the graph traversal operation are readily accessible.

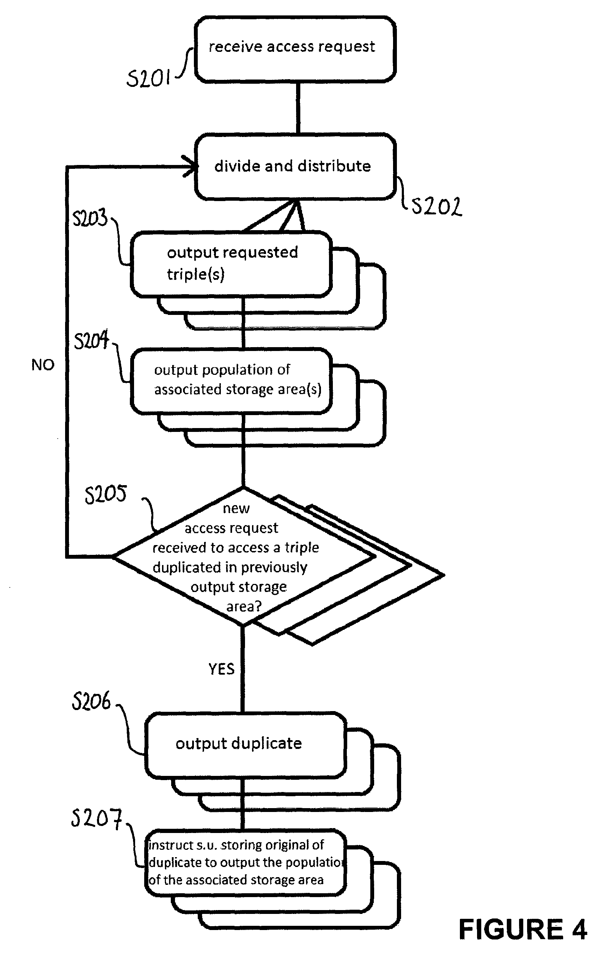

Figure 4 sets out an exemplary process for handling access requests. The triples and associated stored data, whether stored as a KVS or in any other form, are accessible to client applications, which issue requests/queries for data in the database. For example, a query may be for a single triple, or for a range of triples, and may be part of a graph traversal operation in which a sequence of triples linked semantically (for example, the object of one access being the subject of the next) are accessed. Queries may be made via an API or some other layer or interface which enables applications to access the database. Alternatively, access requests/queries may originate from within the distributed network of storage units, for example, if a storage unit (or a computing apparatus hosting a storage unit) is in receipt of a request for a triple or triples which are not stored locally, but are stored on another storage unit.

At step S201 an access request is received. The access request may be received at a database controller, or some component or unit having control functionality. For example, an access request from an application may be received by a centralised controller, or may be received by a functional component of a computing apparatus hosting a storage unit from among the plurality of distributed storage units. The functional component may be, for example, an access handler. At S202 the access request, and specifically the range of triples targeted by the request, is divided into sub-requests for individual storage units among the plurality of storage units, identifying the triples from the received request stored on those individual storage units. The sub-requests are distributed to the respective storage units. An access to a mapping table or some other technique may be used by the controller or access handler to generate and distribute further access requests for triples in the received access request that are hosted at storage units other than the storage unit receiving the request. Those further access requests may be handled by the receiving storage units in the same way as the received access request is handled at the storage unit generating the further requests. Steps S203 to S207 are performed at the storage unit receiving the original access request at S201, but may also be performed at each storage unit receiving a subrequest. Of course, depending on the implementation and the functionality attributed to the storage unit, it may be that steps S203 to S207 may be considered to be carried out by a computing apparatus hosting a storage unit, rather than by the storage unit itself. Either interpretation is tenable.

At S203 the requested triple(s) are output. The nature of the outputting will depend on the implementation, but may include making data representing the requested triples available to an application, transferring such data to a particular location or component, such as an I/O module, or some other form of outputting.

At S204, the storage area(s) associated with the output triples are also output, or the population(s) thereof are output. Again, the nature of the outputting will depend on the implementation, but may include placing the data (or a copy thereof) in a storage component that is more readily or more quickly accessible than the main storage unit, for example, a local cache memory (whereas the main storage unit may be considered a hard disk or main data storage unit).

At S205 a further access request is received at the same storage unit which performed steps S203 and S204. If the further access request is to a triple for which a duplicate version was not previously output and is not currently available at the output location, such as the local cache memory, then the flow returns to S202 and the further access request is divided and distributed amongst the storage units. If, however, the further access request is for a triple (or includes a request for a triple) for which a duplicate version was previously output and is currently available at the output location, such as the local cache memory, then the flow proceeds to S206 and the duplicate version is read from the output location. The need to contact another storage unit is obviated. The flow may then proceed to S207, at which the storage unit hosting the original version of the duplicate output at S206 is identified, and the storage area associated with said original version is loaded into the output location local to the identified storage unit (for example, the local cache memory). Thus, should the subsequent read access request be for a triple having a duplicate present in that storage area, it can be accessed from the cache memory of the storage unit without the need to access the main storage unit.

Figure 4 illustrates how the storage areas associated with triples may be leveraged to improve the performance of a database in response to graph traversals. A further example of how the storage areas may be leveraged is set out below:

Based on the assumption that the network latency of high speed network connections over which the distributed network of storage units communicate (normally present in data storage clusters and data centres) is relatively less than disk I/O latency of a spin disk provided as the main storage unit (including seeking time and read/writer time), the triple local caches (exemplary of the storage are associated with a triple) are loaded into an accessible memory component for efficiency. Let the key value quadruple represented as $(t,(cache,p)^-)$, where $t$ is the triple as key, 'cache' is the associated storage area of related triples, and $p$ is the pointer to the storage unit storing the original version of a triple being stored as a duplicate in the associated storage area.

1. When $t$ is accessed, the locally cached triples connected to $t$ (that is to say, the duplicates stored in the storage area associated with t) will all be loaded into the local accessible memory component.

2. If one of the preloaded triples $t'$ is accessed, the respective pointer will be followed and the server holding $t'$ will be instructed to load from the storage area associated with $t'$ all its related triples; effectively a $n$ level look ahead triple cache is facilitated, where $n$ is configurable for flexibility.

3. This process will continue until the triple traversal is finished.

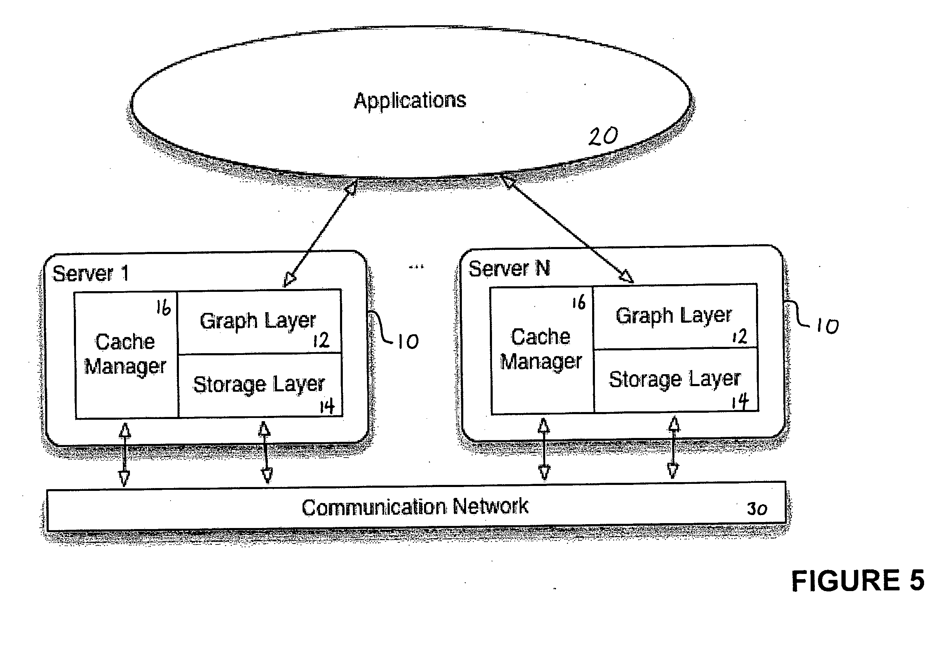

Figure 5 illustrates an exemplary system architecture. The system is composed of a set of servers 10 distributed over a network, including a communication network 30. Applications 20 connect to the system via any of the servers 10.

Each server 10 includes the following components:

- storage layer 14 (exemplary of the triple storage unit mentioned elsewhere in this document, and/or exemplary of a part of a triple storage controller) - configured to implement the ordered KVS (exemplary of the ordered triples) and to store encoded data as triples;

- graph layer 12 - operating in cooperation with the graph layers 12 of other servers 10, configured to export a graph view of the stored triples to the application 20;

- cache manager 16 (exemplary of the storage area storage unit mentioned elsewhere in this document, and/or exemplary of a part of the storage area controller and the storage area population controller) - configured to manage the storage areas (caches) associated with each triple.

It is noted that, in embodiments, where the cache associated with a triple is mentioned, this reference to 'cache' does not refer to a physical cache component or storage space thereon, but in fact refers to a storage area containing data that will be loaded to a cache when the associated triple is accessed, to enable quick access to the data related to the accessed triple stored in the storage area. On the other hand, the cache memory to which a storage area may be output, does refer to a physical cache.

The first layer is the client application process 20. The client application process 20 is exemplary of a machine that may wish to access a database embodying the present invention. The client application 20 may be hosted in a cloud environment, in a server of a client:server architecture, or may be running on the machine of an end user. The client application 20 has some requirement to access the database, for example, to query the data stored therein.

The Storage Layer 14 exports a hash map (put/get) and range query API accessible by applications 20. It is responsible for storing the Keys and Values in stable storage, using a data structure which allows executing range queries in the Key, wherein the keys are the triples and the values are the associated storage areas. The entire triple is encoded in the Key part of the KVS where the cache (storage area containing duplicates of related triples) is stored in the Value part of the KVS and thus associating related data with each Key, i.e. each triple. This Storage Layer 14 uses the network 30 to communicate with other servers 10 and distribute the data among all servers 10.

The graph layer 12 is configure to provide an interface to manage nodes and edges in the graph database, converting the information to triples. These triples may be encoded/represented as Strings, so that the information can be stored in the Key of a KVS.

There are many ways in which the storage layer 14 and graph layer 12 can be realised. For example, in an implementation in which the triples are encoded as RDF triples, and the triples and associated storage areas are stored as a key value store, the storage layer 14 may include an RDF processor and the graph layer 12 may include a wrapper API.

The wrapper API and RDF processor may be provided as distinct processes, or may work together in a single process. The wrapper API simplifies the interface by which the application 20 access the RDF processor and the distributed key-value store, for example, by providing functions that combine different aspects of the basic functions provided by other APIs in the system architecture. For example, REST can be used as an API wrapper for the RDF processor. Therefore, in the system architecture of Figure 4, the client application 20 interacts with the RDF processor through a well-defined wrapper API. The wrapper API 12 may include interfaces to send queries to a SPARQL engine included in the RDF processor.

The RDF processor may include a SPARQL engine that is configured to split a "complex query" received via the wrapper API from the client application 20 into several simple range queries, one per storage unit/server. RDF triple data is stored as a set of ordered data items across a network of servers 10.

The cache manager maintains the cache (storage area containing duplicates of related triples) for each triple, including populating the storage area, removing data from the storage area, and updating the storage area. The cache manager 16 is exemplary of a storage area controller, insofar as it maintains associations between triples and a storage area dedicated to storing duplicates of related triples, and is exemplary of a storage area population manager insofar as it is responsible for populating the storage areas, removing duplicates from the storage areas, and updating the storage areas.

Exemplary processes for populating, updating, cleaning (removing duplicates from) and generally managing the storage area associated with a triple shall now be presented. The functionality discussed in the examples below may generally be attributed to a component such as a storage area population controller, since the processes relate to the content of the storage areas, rather than the actual allocation of storage space and maintenance of associative links, such as may be performed by a storage area storage controller.

In the following example, the triples and their associated storage areas are implemented as an ordered KVS in which the triples are stored as keys and the storage area associate with a triple is referred to as a 'cache', which denotes the conceptual nature of the storage area, that is the intention for the data therein to be readily accessible when output to a cache memory, rather than denoting any physical limitation on the storage of the storage area itself. That is to say, the storage area (or cache) is ordinarily stored in a main storage area such as a hard disk drive, and may be output to a cache memory when its associated triple is accessed, such a process is set out in more detail in Figure 4.

Given a triple $t$, the triples whose duplicates are stored in the associated storage area are include those that define a sub-graph or sub-graphs overlapping with the subject or the object of the associated triple on the database of graph data. In that sense, they can be considered to be 'related' to $t$. Overlapping denotes that a common graph resource is included in both the triple and the sub-graph formed by triples whose duplicates are stored in the storage area associated with $t$. For example, a sub-graph may be a region of the graph defined by all of the graph resources within $n$ directed predicate links of the object graph resource of $t$ (following the direction of the predicate links). For example, all of the graph resources included as object graph resources in triples for which the object of $t$ is the subject graph resource are within 1 directed predicate link of the object of $t$, and the triples representing the predicate links between those graph resources and the object of $t$ may be duplicated in the storage area associated with $t$. In that example, $n$ is 1, if the situation were extended to include their neighbours along directed predicate links, then $n$ would be 2.

A graph traversal route itself defines a sub-graph, albeit a linear one, from a starting graph resource to a target graph resource following directed predicate links in the graph representation, and thus the graph traversal reads (accesses) the triples representing those links. Graph traversal routes starting from a graph resource of the triple *t* may thus be said to overlap with *t*, because, for example, the object graph resource of *t* becomes the subject graph resource of the next triple read in the graph traversal.

Two approaches (which may be used alternatively or in combination with one another) for selecting which triples should be stored as duplicates in the storage area related to a triple *t* may be summarised as follows:

> 1. Given a triple t, the cache stores a named graph that is composed by the nodes of the first *N* levels when following the edges of the graph;
> 2. Given a triple t, the cache stores triples that compose the most common traversals executed by applications.

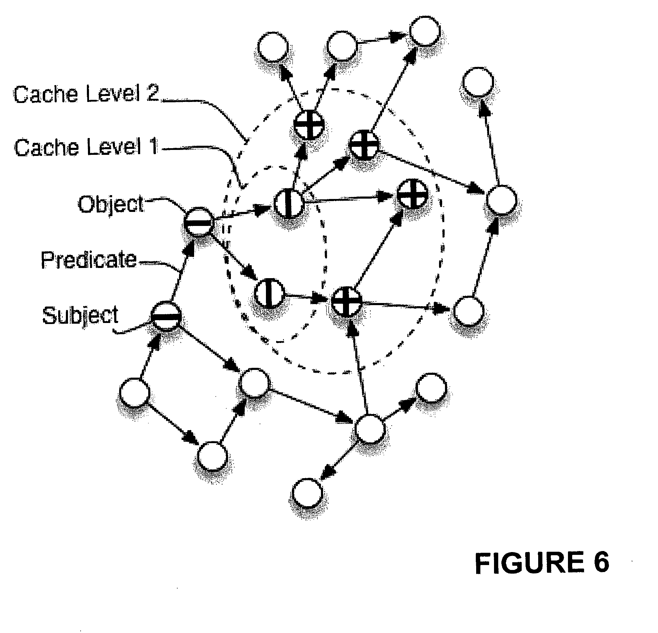

In the first example, the local caching of (populating the storage area associated with) $t = (s,p,o)$ starts by duplicating the triples from the named graph of *o*, *t*'s object. A *named graph* is a sub-graph that consists of all direct/asserted semantic restrictions on a concept. Inspected in a plain graph perspective, a *named graph* is all the direct neighbours of a vertex representing a concept or an instance in RDF. The named graph to be duplicated and stored in a cache/storage area associated with a triple is limited according to a specific policy. Many policies can be applied to limit the named graph. Exemplary approaches are discussed above, and Figure 6 is an illustration of a graph that highlights the triple (Subject, Predicate, Object) and the sub-graph defined by triples whose duplicates may be stored in the storage area. Illustrated in Figure 6, one way of limiting the sub-graph is by its connection levels or depth. For flexibility, this level can be made variable, for example, depending on implementation requirements, it may be configurable by a user or database administrator in consideration of performance requirements and availability of space. For example, if the user configures the depth to be 1, only the nodes with a vertical line (and their connections/edges with the Object) are cached - that is to say, the triples defining the predicate links between those nodes (graph resources) and the object node of the triple are cached. If the level is set to 2, both the nodes with vertical lines and the nodes with + signs are cached - again, the triples defining the sub-graph starting at the object node and terminating in the nodes two directed predicate links away (in the direction of the predicate links) from the object are stored in the storage area. The storage area/cache is the value of the Key-Value pair with (Subject, Predicate, Object) identified in Figure 6 as the key.

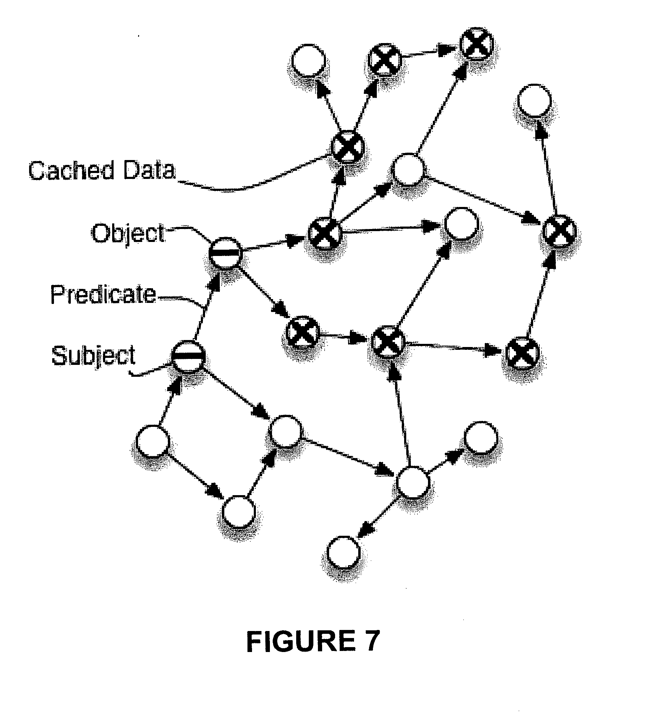

In the second example levels are not defined to select triples to duplicate to populate the cache. Instead, it defines the number of paths based on historically-used traversals. The same policies can be applied to limit the cache, for example, a limit on distance from the object as a maximum number of direct predicate links (the limit is 4 in Figure 7). The approach is illustrated in Figure 7, where the triple that holds the cache is marked and the nodes forming the subject and object of the triple denoted with - signs. The sub-graphs of the historically most-traversed routes are indicated by marking the nodes with x signs. The triples representing those sub graphs (starting from the node marked 'object' and extending away for four directed predicate links) are duplicated and added to the storage area. Note that the cached traversals may end anywhere in the graph and it depends on the traversals previously read by applications or queries. Such historical usage data can be found in system log or query log and the statistics can be based on counting the number of paths that are previous queried/traversed (as highlighted in by the nodes marked with an x in Figure 7).

Optionally, the system can start by populating the storage area associated with each triple to its maximum size and pruning unused parts of the duplicate sub-graph afterwards. Alternatively, the database can initially include empty caches (storage areas) for all triples and populate each cache only when needed.

An exemplary approach to deciding when to update the population of the storage area, and performing the update, is set out below.

Triple local cache is updated as follows: given a triple $t = (s,p,o)$,

> 1. If a triple $t' = (s,p',o')$ is inserted, a new cache/storage area is created for the new triple t', however, it does not fit into a sub-graph defined by either approach 1. or 2. set out above for populating the cache/storage area associated with t, and hence the cache/storage area associated with t does not need to be updated.
> 2. If a triple $t' = (o,p'',o'')$ is inserted with the object of original triple as subject, the cache/storage areas associated with t might need to be updated, depending on the approach used for selecting triples to duplicate in the cache/storage area. For example, if the first approach is used, then a duplicate of t' will be added to the cache/storage area of t, because t' is within a single predicate link of o. Exemplary update procedures include:
>
> > a. Eager approach: all the triples having *o* as object will be locked and their corresponding caches will be updated. In this case, the advantage is evident in that only a small fragment of data is locked while consistency is reinforced instead of a substantial sub-graph would need to be locked. Locking a triple includes disallowing the access (read/write) to a triple for a finite amount of time, to issue a specific operation on it and ensure data consistency. In this case, it is necessary to update the cache (or storage area) of a specific triple t. So, to avoid inconsistencies on concurrent operations read are issuing a traverse operation through t, the access of t (and its cache) are locked, the cache is updated, and t is unlocked. Concurrent operations will wait for the release of t lock, before resuming their traversal operations.

b. Lazy approach: (affected) local caches of all the triples having *o* as object will be erased/reset. The local cache is reconstructed at system idle time or gradually when the graph is queried and updated.

In order to reduce the size of local cache, a size limit can be imposed and general purpose string compression operations can also be applied. While there are many existing algorithms (e.g. standard GZip algorithm) can be adopted in the latter operation, the former will be discussed in more detail.

The size of triple local cache may be configurable for a database administrator or end users. In case it cannot accommodate all the triples in the named graph (or all the triples that are intended to be cached in the given level of depth as discussed above), the following equations may be used to compute which triples should be removed from the cache and which triples should be inserted.

The first criterion is the recency regulated by the time decaying factor, wherein 'recency' in an indication of how recently a duplicate t among the duplicates in a storage area/cache was accessed:

$$\mathrm{recency}(t) = \alpha \, e^{-\beta \, (time - time_0)}$$

This utilises an exponential decaying factor, where *time* is the current time and $time_0$ the time that the cached duplicate was last queried. $time_0$ may be stored in the KVS while recency($t$) may be computed at runtime when certain cached triples are to be discarded, for example, by a storage area population controller.

The second criterion is the frequency adopted as:

$$\mathrm{freq}_0(t) = \frac{1}{C}$$

where C is the size of the storage area in terms of the number of duplicate triples that can fit into the storage area. Thus, when a duplicate has not yet been accessed its initial frequency value is the multiplicative inverse of the storage area size. Subsequent frequency values are derived as follows:

$$\mathrm{freq}_k(t) = \begin{cases} \mathrm{freq}_{k-1}(t) \cdot \frac{1}{C}, & t \text{ is accessed at } k\text{th iteration} \\ \mathrm{freq}_{k-1}(t), & t \text{ is not accessed at } k\text{th iteration} \end{cases}$$

where k is the number of access to the triple local cache. The frequency value of each cached triple is adjusted every time the cache is accessed. If the triple is not the one being visited, its frequency value does not change, otherwise the frequency value is adjusted accordingly. Note that the frequency value is actually decreasing against the number of visits. $\mathrm{freq}_K(t)$ can be adjusted with 1 - log *x* to align with intuition.

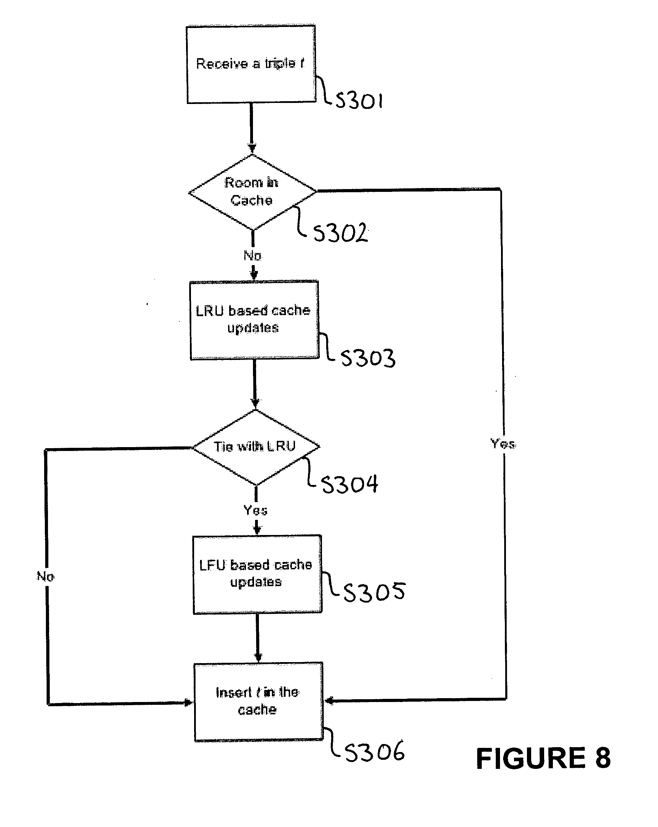

Figure 8 sets out an exemplary process for updating a storage area. At S301, a new triple t is added to the database, and t falls within a sub-graph that is to be duplicated in a storage area. At S302, a check is made to assess whether there is space in the storage area for another duplicate. If the answer is 'yes', then no removal is necessary, and the flow proceeds to S306, and a duplicate of t is inserted into the storage area. Otherwise, if there is not room in the storage area, the flow proceeds to S303, and the database population manager assesses which of the duplicates was least-recently accessed, for example, using the recency equation set out above. The flow proceeds to S304, at which a check is performed to see if there is an outright least-recently accessed duplicate, or whether there was one or more duplicates accessed equally long ago (to within the resolution of the calculation). If an outright least-recently accessed duplicate is identified ('No' at S304), the flow proceeds to S306 and the identified duplicate is replaced by a duplicate of the new triple t in the storage area. Alternatively, if one or more duplicates were accessed equally long ago, the flow proceeds to S305, and the database population manager assesses which of the duplicates is least-frequently accessed, for example, using the frequency equations set out above. The least-frequently accessed duplicate from among the least-recently accessed duplicates is identified, and the flow proceeds to S306 at which the identified duplicate is replaced by a duplicate of t. When there is tie based on the recency value, Least Frequently Used (LFU) strategy is applied using the frequency value computed as above.

In any of the above aspects, the various features may be implemented in hardware, or as software modules running on one or more processors. Features of one aspect may be applied to any of the other aspects.

The invention also provides a computer program or a computer program product for carrying out any of the methods described herein, and a computer readable medium having stored thereon a program for carrying out any of the methods described herein. A computer program embodying the invention may be stored on a computer-readable medium, or it could, for example, be in the form of a signal such as a downloadable data signal provided from an Internet website, or it could be in any other form.

**Claims**

1. A method of storing a database of graph data encoded as triples, each triple denoting a subject graph resource, an object graph resource and a directed predicate linking the two graph resources, the method comprising:

   storing (S101) each of the triples as a member of an ordered set distributed across a plurality of storage units, the order of the triples being determinable by comparisons between the triples;
   maintaining (S102) one or more storage areas, each associated with a different triple and being stored on the same storage unit as the associated triple; and
   populating (S103) the or each of the one or more storage areas with duplicates of triples that define a sub-graph or sub-graphs overlapping with the subject or the object of the associated triple on the database of graph data, wherein the sub-graph or sub-graphs comprise the one or more sub-graphs defined by selected graph traversal routes among graph traversal routes including either the object graph resource or the subject graph resource of the associated triple, and the selecting of graph traversal routes is in dependence upon the usage frequency of graph traversal routes including either the object graph resource or the subject graph resource of the associated triple.

2. A method according to claim 1, wherein the sub-graph or sub-graphs comprise the sub-graph defined by a maximum number of predicate links directed away from either the object graph resource or the subject graph resource of the associated triple.

3. A method according to claim 2, further comprising:

   updating the populations of the or each of the one or more storage areas by adding a duplicate of a new triple inserted into the defined sub-graph.

4. A method according to claim 1, further comprising:

   updating the populations of the or each of the one or more storage areas by re-selecting the graph traversal routes defining the one or more sub-graphs.

5. A method according to claim 4, wherein the re-selecting of graph traversal routes is in dependence upon the usage frequency of graph traversal routes including either the object graph resource or the subject graph resource of the associated triple.

6. A method according to claim 3 or claim 4, wherein updating the populations of the or each of the one or more storage areas includes removing a duplicate from the population in dependence upon:

   the time elapsed since the duplicate was last accessed relative to the time elapsed since the other duplicates in the population were last accessed; and/or
   the frequency of read accesses to the storage area in which the duplicate is accessed relative to the frequency of read accesses to the storage area in which the other duplicates in the population are accessed.

7. A method according to any of the preceding claims, wherein the triples are string objects; and wherein the triples are ordered according to alphabetical comparisons of the string objects.

8. A method according to any of the preceding claims, wherein the database includes a key value system in which each of the one or more storage areas are values of key-value pairs, and their associated triples are the respective keys.

9. A method according to any of the preceding claims, wherein each duplicate populating one of the one or more storage areas is stored in correspondence with an identifier, identifying the storage unit from among the plurality of storage units on which the original triple is stored; and
the method further comprises:

at one of the plurality of storage units, receiving an access request specifying a triple;
reading the specified triple and loading the associated storage area into a cache memory of the one of the plurality of storage units; and
if a new access request is received at the one of the plurality of storage units specifying a triple of which a duplicate is included in the population of the storage area loaded into the cache memory, using the identifier corresponding to the duplicate to send a request to the identified storage unit for the storage area associated with the original version of the triple specified in the new access request.

10. A database controller configured to control a database in which graph data is encoded as triples, each triple denoting a subject graph resource, an object graph resource, and a directed predicate linking the two graph resources, the database controller comprising:

a triple storage controller configured to control storing each of the triples as a member of an ordered data set distributed across a plurality of storage units, and configured to determine the order of the triples by comparisons between them;
a storage area controller configured to maintain one or more storage areas, each associated with a different triple and being stored on the same storage unit as the associated triple; and
a storage area population controller configured to populate the or each of the one or more storage areas with duplicates of triples that define a sub-graph or sub-graphs overlapping with the subject or object of the associated triple on the database of graph data, wherein the sub-graph or sub-graphs comprise the one or more sub-graphs defined by selected graph traversal routes among graph traversal routes including either the object graph resource or the subject graph resource of the associated triple, and the selecting of graph traversal routes is in dependence upon the usage frequency of graph traversal routes including either the object graph resource or the subject graph resource of the associated triple.

11. A computing apparatus (10) configured to operate as a storage unit among a distributed network of storage units storing a database of graph data encoded as triples, each triple denoting a subject graph resource, an object graph resource and a directed predicate linking the two graph resources, the computing apparatus (10) comprising:

a triple storage unit (14) configured to store each of a subset of the triples as a member of an ordered subset, the ordered subset forming part of an ordered set of triples distributed across the distributed network of storage units, the order of the triples being determinable by comparisons between the triples;
a storage area storage unit (16) configured to maintain one or more storage areas, each associated with a different triple from among the ordered subset and being populated with duplicates of triples that define a sub-graph or sub-graphs overlapping with the subject or the object of the associated triple on the database of graph data, wherein the sub-graph or sub-graphs comprise the one or more sub-graphs defined by selected graph traversal routes among graph traversal routes including either the object graph resource or the subject graph resource of the associated triple, and the selecting of graph traversal routes is in dependence upon the usage frequency of graph traversal routes including either the object graph resource or the subject graph resource of the associated triple.

12. A system comprising a database controller according to claim 10 and a plurality of computing apparatuses (10) according to claim 11 configured to operate as a distributed network of storage units.

13. A system according to claim 12, wherein the plurality of computing apparatuses (10) are configured to operate cooperatively to form the database controller.

14. A suite of computer programs which, when executed by a distributed network of computing apparatuses (10), cause the distributed network of computing apparatuses (10) to function as a system according to claim 12 or 13.

**EP 2 731 022 B1**

**Patentansprüche**

1. Verfahren des Speicherns einer Datenbank von Graphdaten, die als Tripel codiert sind, wobei jedes Tripel eine Subjektgraphenressource, eine Objektgraphenressource und ein gerichtetes Prädikat bezeichnet, das die zwei Graphenressourcen verknüpft, wobei das Verfahren Folgendes umfasst:

   Speichern (S101) jedes der Tripel als Element einer geordneten Menge, die über mehrere Speichereinheiten verteilt ist, wobei die Ordnung der Tripel durch Vergleiche zwischen den Tripeln bestimmbar ist;
   Pflegen (S102) eines oder mehrerer Speicherbereiche, wobei jeder einem unterschiedlichen Tripel zugeordnet ist und auf derselben Speichereinheit wie das zugeordnete Tripel gespeichert ist; und
   Populieren (S103) des oder jedes der einen oder mehreren Speicherbereiche mit Duplikaten von Tripeln, die einen Teilgraphen oder Teilgraphen definieren, die sich mit dem Subjekt oder dem Objekt des zugeordneten Tripels auf der Datenbank von Graphdaten überlappen, wobei der Teilgraph oder die Teilgraphen den einen oder die mehreren Teilgraphen umfassen, die durch ausgewählte Graphtraversalwege unter Graphtraversalwegen definiert sind, die entweder die Objektgraphenressource oder die Subjektgraphenressource des zugeordneten Tripels beinhalten, und das Auswählen von Graphtraversalwegen in Abhängigkeit von der Nutzungshäufigkeit von Graphtraversalwegen steht, die entweder die Objektgraphenressource oder die Subjektgraphenressource des zugeordneten Tripels beinhalten.

2. Verfahren nach Anspruch 1, wobei der Teilgraph oder die Teilgraphen den Teilgraphen umfassen, der durch eine Maximalzahl von Prädikatverknüpfungen definiert ist, die von entweder der Objektgraphenressource oder der Subjektgraphenressource des zugeordneten Tripels fort gerichtet sind.

3. Verfahren nach Anspruch 2, das ferner Folgendes umfasst:

   Aktualisieren der Populationen des oder jedes der einen oder mehreren Speicherbereiche durch Hinzufügen eines Duplikates eines neuen Tripels, das in den definierten Teilgraphen eingefügt ist.

4. Verfahren nach Anspruch 1, das ferner Folgendes umfasst:

   Aktualisieren der Populationen des oder jedes der einen oder mehreren Speicherbereiche durch Neuauswählen der Graphtraversalwege, die den einen oder die mehreren Teilgraphen definieren.

5. Verfahren nach Anspruch 4, wobei das Neuauswählen von Graphtraversalwegen in Abhängigkeit von der Nutzungshäufigkeit von Graphtraversalwegen steht, die entweder die Objektgraphenressource oder die Subjektgraphenressource des zugeordneten Tripels beinhalten.

6. Verfahren nach Anspruch 3 oder Anspruch 4, wobei Aktualisieren der Populationen des oder jedes der einen oder mehreren Speicherbereiche Entfernen eines Duplikates aus der Population in Abhängigkeit von Folgendem beinhaltet:

   der Zeit, die verstrichen ist, seit das letzte Mal auf das Duplikat zugegriffen wurde, relativ zur Zeit, die verstrichen ist, seit auf die anderen Duplikate in der Population das letzte Mal zugegriffen wurde; und/oder
   der Häufigkeit von Lesezugriffen auf den Speicherbereich, in der auf das Duplikat zugegriffen wird, relativ zur Häufigkeit von Lesezugriffen auf den Speicherbereich, in der auf die anderen Duplikate in der Population zugegriffen wird.

7. Verfahren nach irgendeinem der vorhergehenden Ansprüche, wobei die Tripel Zeichenkettenobjekte sind und wobei die Tripel gemäß alphabetischen Vergleichen der Zeichenkettenobjekte geordnet sind.

8. Verfahren nach irgendeinem der vorhergehenden Ansprüche, wobei die Datenbank ein Schlüsselwertsystem beinhaltet, in dem jeder des einen oder der mehreren Speicherbereiche Werte von Schlüsselwertpaaren sind und ihre zugeordneten Tripel die jeweiligen Schlüssel sind.

9. Verfahren nach irgendeinem der vorhergehenden Ansprüche, wobei jedes Duplikat, das einen des einen oder der mehreren Speicherbereiche populiert, in Übereinstimmung mit einem Identifikator gespeichert ist, der die Speichereinheit unter den mehreren Speichereinheiten identifiziert, auf der das ursprüngliche Tripel gespeichert ist, und wobei das Verfahren ferner Folgendes umfasst:

Empfangen einer Zugriffanforderung, die ein Tripel spezifiziert, an einer der mehreren Speichereinheiten;
Lesen des spezifizierten Tripels und Laden des zugeordneten Speicherbereiches in einen Cachespeicher der einen der mehreren Speichereinheiten und,
wenn eine neue Zugriffanforderung an der einen der mehreren Speichereinheiten empfangen wird, Spezifizieren eines Tripels, von dem ein Duplikat in der Population des Speicherbereiches beinhaltet ist, der in den Cachespeicher geladen worden ist, unter Verwendung des Identifikators, der dem Duplikat entspricht, um eine Anforderung an die identifizierte Speichereinheit zu senden für den Speicherbereich, der der ursprünglichen Version des Tripels zugeordnet ist, das in der neuen Zugriffanforderung spezifiziert ist.

10. Datenbanksteuerung, die konfiguriert ist, eine Datenbank zu steuern, in der Graphdaten als Tripel codiert sind, wobei jedes Tripel eine Subjektgraphenressource, eine Objektgraphenressource und ein gerichtetes Prädikat bezeichnet, das die zwei Graphenressourcen verknüpft, wobei die Datenbanksteuerung Folgendes umfasst:

eine Tripelspeichersteuerung, die konfiguriert ist, Speichern jedes der Tripel als ein Element einer geordneten Datenmenge zu steuern, die über mehrere Speichereinheiten verteilt ist, und konfiguriert ist, die Ordnung der Tripel durch Vergleiche zwischen ihnen zu bestimmen;
eine Speicherbereichssteuerung, die konfiguriert ist, einen oder mehrere Speicherbereiche zu pflegen, wobei jeder einem unterschiedlichen Tripel zugeordnet ist und auf derselben Speichereinheit wie das zugeordnete Tripel gespeichert ist; und
eine Speicherbereichspopulationssteuerung, die konfiguriert ist, den oder jeden der einen oder mehreren Speicherbereiche mit Duplikaten von Tripeln zu populieren, die einen Teilgraphen oder Teilgraphen definieren, die sich mit dem Subjekt oder dem Objekt des zugeordneten Tripels auf der Datenbank von Graphdaten überlappen, wobei der Teilgraph oder die Teilgraphen den einen oder die mehreren Teilgraphen umfassen, die durch ausgewählte Graphtraversalwege unter Graphtraversalwegen definiert sind, die entweder die Objektgraphenressource oder die Subjektgraphenressource des zugeordneten Tripels beinhalten, und das Auswählen von Graphtraversalwegen in Abhängigkeit von der Nutzungshäufigkeit von Graphtraversalwegen steht, die entweder die Objektgraphenressource oder die Subjektgraphenressource des zugeordneten Tripels beinhalten.

11. Berechnungsvorrichtung (10), die konfiguriert ist, als eine Speichereinheit unter einem verteilten Netz von Speichereinheiten zu arbeiten, das eine Datenbank von Graphdaten speichert, die als Tripel codiert sind, wobei jedes Tripel eine Subjektgraphenressource, eine Objektgraphenressource und ein gerichtetes Prädikat bezeichnet, das die zwei Graphenressourcen verknüpft, wobei die Berechnungsvorrichtung (10) Folgendes umfasst:

eine Tripelspeichereinheit (14), die konfiguriert ist, jedes einer Teilmenge der Tripel als ein Element einer geordneten Teilmenge zu speichern, wobei die geordnete Teilmenge einen Teil einer geordneten Menge von Tripeln bildet, die über das verteilte Netz von Speichereinheiten verteilt sind, wobei die Ordnung der Tripel durch Vergleiche zwischen den Tripeln bestimmbar ist;
eine Speicherbereichsspeichereinheit (16), die konfiguriert ist, einen oder mehrere Speicherbereiche zu pflegen, wobei jeder einem unterschiedlichen Tripel unter der geordneten Teilmenge zugeordnet ist und mit Duplikaten von Tripeln populiert ist, die einen Teilgraphen oder Teilgraphen definieren, die sich mit dem Subjekt oder dem Objekt des zugeordneten Tripels auf der Datenbank von Graphdaten überlappen, wobei der Teilgraph oder die Teilgraphen den einen oder die mehreren Teilgraphen umfassen, die durch ausgewählte Graphtraversalwege unter Graphtraversalwegen definiert sind, die entweder die Objektgraphenressource oder die Subjektgraphenressource des zugeordneten Tripels beinhalten, und das Auswählen von Graphtraversalwegen in Abhängigkeit von der Nutzungshäufigkeit von Graphtraversalwegen steht, die entweder die Objektgraphenressource oder die Subjektgraphenressource des zugeordneten Tripels beinhalten.

12. System, das eine Datenbanksteuerung nach Anspruch 10 und mehrere Berechnungsvorrichtungen (10) nach Anspruch 11 umfasst, die konfiguriert sind, als ein verteiltes Netz von Speichereinheiten zu arbeiten.

13. System nach Anspruch 12, wobei die mehreren Berechnungsvorrichtungen (10) konfiguriert sind, kooperativ zu arbeiten, um die Datenbanksteuerung zu bilden.

14. Suite von Computerprogrammen, die, wenn sie durch ein verteiltes Netz von Berechnungsvorrichtungen (10) ausgeführt werden, das verteilte Netz von Berechnungsvorrichtungen (10) veranlassen, als ein System nach Anspruch 12 oder 13 zu fungieren.

**Revendications**

1. Procédé d'enregistrement dans une base de données de données graphiques codées sous forme de triplets, chaque triplet représentant une ressource graphique sujet, une ressource graphique objet et un prédicat dirigé liant les deux ressources graphiques, le procédé comprenant :

   l'enregistrement (S101) de chacun des triplets en tant que membre d'un ensemble ordonné réparti sur une pluralité d'unités d'enregistrement, l'ordre des triplets pouvant être déterminé par comparaisons entre les triplets ;
   la gestion (S102) d'une ou plusieurs zones d'enregistrement, chacune étant associée à un triplet différent et étant enregistrée sur la même unité d'enregistrement que le triplet associé ; et
   le peuplement (S103) de la zone ou de chaque zone de la ou des zones d'enregistrement avec des copies des triplets qui définissent un ou des sous-graphiques superposés au sujet ou à l'objet du triplet associé sur la base de données de données graphiques, dans lequel le ou les sous-graphiques comprennent le ou les sous-graphiques définis par des routes graphiques transversales sélectionnées parmi les routes graphiques transversales incluant la ressource graphique objet ou la ressource graphique sujet du triplet associé, et la sélection des routes graphiques transversales dépend de la fréquence d'utilisation des routes graphiques transversales incluant la ressource graphique objet ou la ressource graphique sujet du triplet associé.

2. Procédé selon la revendication 1, dans lequel le ou les sous-graphiques comprennent le sous-graphique défini par un nombre maximum de liens de prédicat dirigés à l'opposé de la ressource graphique objet ou de la ressource graphique sujet du triplet associé.

3. Procédé selon la revendication 2, comprenant en outre :

   la mise à jour des populations de la zone ou de chacune de la ou des zones d'enregistrement en ajoutant une copie d'un nouveau triplet inséré dans le sous-graphique défini.

4. Procédé selon la revendication 1, comprenant en outre :

   la mise à jour des populations de la zone ou de chacune de la ou des zones d'enregistrement en sélectionnant à nouveau les routes graphiques transversales définissant le ou les sous-graphiques.

5. Procédé selon la revendication 4, dans lequel la nouvelle sélection des routes graphiques transversales dépend de la fréquence d'utilisation des routes graphiques transversales incluant la ressource graphique objet ou la ressource graphique sujet du triplet associé.

6. Procédé selon la revendication 3 ou la revendication 4, dans lequel la mise à jour des populations de la zone ou de chacune de la ou des zones d'enregistrement comporte le retrait d'une copie de la population en fonction :

   du temps écoulé depuis le dernier accès à la copie par rapport au temps écoulé depuis le dernier accès aux autres copies dans la population ; et/ou
   de la fréquence des accès de lecture à la zone d'enregistrement dans laquelle on accède à la copie par rapport à la fréquence des accès de lecture à la zone d'enregistrement dans laquelle on accède aux autres copies de la population.

7. Procédé selon l'une quelconque des revendications précédentes, dans lequel les triplets sont des objets chaîne ; et dans lequel les triplets sont ordonnés en fonction de comparaisons alphabétiques des objets chaîne.

8. Procédé selon l'une quelconque des revendications précédentes, dans lequel la base de données comporte un système de valeurs de clés dans lequel chaque zone de la ou des zones d'enregistrement est constituée de valeurs de paires clé-valeur et leurs triplets associés sont les clés respectives.

9. Procédé selon l'une quelconque des revendications précédentes, dans lequel chaque copie peuplant une zone de la ou des zones d'enregistrement est enregistrée en correspondance avec un identifiant, qui identifie l'unité d'enregistrement parmi la pluralité d'unités d'enregistrement sur lesquelles est enregistré le triplet d'origine ; et
le procédé comprend en outre :

au niveau d'une unité de la pluralité d'unités d'enregistrement, la réception d'une demande d'accès spécifiant un triplet ;

la lecture du triplet spécifié et le chargement de la zone d'enregistrement associée dans une antémémoire de l'unité de la pluralité d'unités d'enregistrement ; et

si une nouvelle demande d'accès est reçue au niveau d'une unité de la pluralité d'unités d'enregistrement spécifiant un triplet dont une copie est incluse dans la population de la zone d'enregistrement chargée dans l'antémémoire, l'utilisation de l'identifiant correspondant à la copie pour envoyer une demande à l'unité d'enregistrement identifiée pour la zone d'enregistrement associée à la version originale du triplet spécifié dans la nouvelle demande d'accès.

10. Contrôleur de base de données configuré pour commander une base de données dans laquelle des données graphiques sont codées sous forme de triplets, chaque triplet représentant une ressource graphique sujet, une ressource graphique objet et un prédicat dirigé liant les deux ressources graphiques, le contrôleur de base de données comprenant :

un contrôleur d'enregistrement de triplet configuré pour commander l'enregistrement de chacun des triplets en tant que membre d'un ensemble de données ordonné réparti sur une pluralité d'unités d'enregistrement, et configuré pour déterminer l'ordre des triplets par comparaisons entre eux ;

un contrôleur de zone d'enregistrement configuré pour gérer une ou plusieurs zones d'enregistrement, chacune étant associée à un triplet différent et étant enregistrée sur la même unité d'enregistrement que le triplet associé ; et

un contrôleur de peuplement de zone d'enregistrement configuré pour peupler la zone ou chaque zone de la ou des zones d'enregistrement avec des copies des triplets qui définissent un ou des sous-graphiques superposés au sujet ou à l'objet du triplet associé sur la base de données de données graphiques, dans lequel le ou les sous-graphiques comprennent le ou les sous-graphiques définis par des routes graphiques transversales sélectionnées parmi les routes graphiques transversales incluant la ressource graphique objet ou la ressource graphique sujet du triplet associé, et la sélection des routes graphiques transversales dépend de la fréquence d'utilisation des routes graphiques transversales incluant la ressource graphique objet ou la ressource graphique sujet du triplet associé.

11. Dispositif de calcul (10) configuré pour fonctionner comme une unité d'enregistrement dans un réseau réparti d'unités d'enregistrement contenant une base de données de données graphiques codées sous forme de triplets, chaque triplet représentant une ressource graphique sujet, une ressource graphique objet et un prédicat dirigé liant les deux ressources graphiques, le dispositif de calcul (10) comprenant :

une unité d'enregistrement de triplets (14) configurée pour enregistrer chaque triplet d'un sous-ensemble de triplets en tant que membre d'un sous-ensemble ordonné, le sous-ensemble ordonné faisant partie d'un ensemble ordonné de triplets réparti sur le réseau réparti d'unités d'enregistrement, l'ordre des triplets pouvant être déterminé par comparaisons entre les triplets ;

une unité d'enregistrement de zone d'enregistrement (16) configurée pour gérer une ou plusieurs zones d'enregistrement, chacune étant associée à un triplet différent du sous-ensemble ordonné et étant peuplée de copies de triplets définissant un ou des sous-graphiques superposés au sujet ou à l'objet du triplet associé sur la base de données de données graphiques, dans lequel le ou les sous-graphiques comprennent le ou les sous-graphiques définis par des routes graphiques transversales sélectionnées parmi les routes graphiques transversales incluant la ressource graphique objet ou la ressource graphique sujet du triplet associé, et la sélection des routes graphiques transversales dépend de la fréquence d'utilisation des routes graphiques transversales incluant la ressource graphique objet ou la ressource graphique sujet du triplet associé.

12. Système comprenant un contrôleur de bases de données selon la revendication 10 et une pluralité de dispositifs de calcul (10) selon la revendication 11, configuré pour fonctionner comme un réseau réparti d'unités d'enregistrement.

13. Système selon la revendication 12, dans lequel la pluralité de dispositifs de calcul (10) sont configurés pour fonctionner en coopération pour former le contrôleur de base de données.

14. Ensemble de programmes informatiques qui, lorsqu'ils sont exécutés par un réseau réparti de dispositifs de calcul (10) font fonctionner le réseau réparti de dispositifs de calcul (10) comme un système selon la revendication 12 ou 13.

**FIGURE 1**

| TRIPLE |
| --- |
| (Kevin Jr., son-of, Kevin Sr.) |
| (Kevin Jr., friend, John) |
| (Kevin Jr., owns, MacBook1) |
| (Kevin Jr., is-a, Human) |
| (Kevin Jr., address, London) |

**FIGURE 2**

store triples ⌐ S101

maintain storage areas
associated with triples ⌐ S102

populate storage areas
with duplicates ⌐ S103

**FIGURE 3**

receive access request

S201

divide and distribute

S202

S203

output requested triple(s)

S204

output population of associated storage area(s)

S205

new access request received to access a triple duplicated in previously output storage area?

NO

YES

S206

output duplicate

S207

instruct s.u. storing original of duplicate to output the population of the associated storage area

**FIGURE 4**

FIGURE 5

Cache Level 2
Cache Level 1
Object
Predicate
Subject

**FIGURE 6**

**FIGURE 7**

FIGURE 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20110022816 A1